# EUROPEAN PATENT SPECIFICATION

(11) **EP 2 588 318 B1**
(45) Date of publication and mention of the grant of the patent: **24.12.2014**
(21) Application number: 11723478.1
(22) Date of filing: 06.06.2011
(51) Int. Cl.: B32B 27/32, B32B 27/34

(54) **FLEXIBLE PACKAGING FILM COMPRISING POLYAMIDE AND POLYOLEFIN**
FLEXIBLE VERPACKUNGSFOLIE MIT POLYAMID UND POLYOLEFIN
FILM D'EMBALLAGE SOUPLE COMPRENANT DU POLYAMIDE ET DE LA POLYOLÉFINE

(30) Priority: 02.07.2010 IN MU19312010
(43) Date of publication of application: 08.05.2013
(73) Proprietor: Unilever N.V., 3013 AL Rotterdam (NL); Unilever PLC, London, Greater London EC4P 0DY (GB); Hindustan Unilever Limited, Mumbai 400 099 (IN)
(72) Inventor: DAS, Sandip, Andheri (East) Mumbai 400 099 (IN); GHOSHAL, Sanjay, Andheri (East) Mumbai 400 099 (IN); LAWANIA, Mudit, Andheri (East) Mumbai 400 099 (IN)
(74) Representative: Hardy, Susan Margaret
(86) International application number: PCT/EP2011/059307
(87) International publication number: WO 2012/000739

(56) References cited:
- WO-A1-2009/041848
- US-A1- 2004 038 055
- US-A1- 2007 026 250
- US-B1- 6 613 407

## Description

### Technical field

The present invention relates to a film for packaging a product, particularly to a film having a layer of polyamide, and a layer of polyolefin.

The invention has been developed primarily for use in packaging detergent powders and will be described hereinafter with reference to this application. However, it will be appreciated that the invention is not limited to this particular field of use.

### Background and related art

Any discussion of the prior art throughout the specification should in no way be considered as an admission that such prior art is widely known or forms part of the common general knowledge in the field.

Nowadays, there is an increasing use of plastic films for packaging. While some of the plastic gets recycled, much of it ends up in landfills. This has led to widespread concern about its impact on the environment, and the importance of recycling and reusing plastics. Therefore, the aspect of recycling of plastic films has assumed great significance. Monolithic films, i.e. films that are made of only one type of material, such as polyethylene, are comparatively easier to recycle. On the other hand, some of the multi-layer plastic films, which are made up of more than one type of polymer, are generally difficult to recycle. Further, in the latter case, quality of the recycled films is also comparatively poor. This problem is more pronounced when the multi-layer films are laminated, and include dissimilar materials, such as polyamides and polyolefins, especially where the relative percentages of such dissimilar materials is highly skewed. This problem is also pronounced when the films include a metallic layer, such as a layer of Aluminium foil. To ensure that recycled films are of good quality, compatibilizers, such as FUSABOND™ ex. DuPont, are generally added during the recycling process.

Multi-layer films which include a layer of polyamide and polyolefin have been disclosed in the art.

US2004/0038055 (Joachim Hawighorst) discloses a multi-layer, deep-drawable film of less than 150µm. The film has an outermost layer of first polyamide, an equalization layer, a second polyamide layer, a bonding agent layer and a sealing layer made from polyolefin and polyolefin copolymer. The equalisation layer that splits the polyamide layer is relatively thick, and it reduces the tendency of the finished film to roll up. The combined thickness of the polyamide layers of the exemplified films is around 28% of the total thickness of the film. One reason for above could be that films which contain Polyamide, and which are suitable for deep-drawing applications, generally need relatively higher content of Polyamide. In a typical deep-drawing process, the film gets stretched because of the force that gets applied during the deep-drawing operation, and in the process, the thickness of the film (and the individual layers) gets considerably reduced.

US5,906,850 (Wolff Walsrode AG, 1999) discloses a thermoformable multilayer film made by blown process or flat-film coextrusion; the film having a layer of polyamide, a coupling agent layer, a second polyamide layer, a coupling agent layer and a sealing layer made from a type of ionomer. This film is meant to be used for cook-in applications, particularly for the production of boil-cured products, in which, there is a better cooking adhesion between the film and the contents to be packaged. The combined thickness of the polyamide layers of the exemplified films ranges from 26 to 47% of the total thickness of the film.

US4407873 (American Can Company, 1983) describes a multilayer extruded film for making pouches. The film has two nylon layers, a tie-layer and an innermost polyolefin layer. This patent does not have any hint or suggestion towards the relative thickness of these layers, or the percentage of polyamide.

CA2172019 (Wolff Walsrode AG, 1996) equivalent to EP0733471 A2 discloses a multilayer thermoformable film made by blown process or flat-film co-extrusion for packaging applications.

The film has a layer of polyamide, a polymeric coupling agent layer, a second polyamide layer, a polymeric coupling agent layer and a layer of polyethylene.

Conventional BON-Poly (Biaxially Oriented Nylon - Polyethylene) laminated films are used very widely in the industry. WO 2004/005021 A1 (Amcor Flexibles Denmark A/S) discloses such films. Such conventional films are generally difficult to recycle, while maintaining good quality of recycled films. Such conventional films are also generally reverse-printed, as opposed to surface printed. Such conventional reverse-printed films have been disclosed in US4556590 (American Can Company, 1985).

Thus there is a need in the art for films which include polyamide and polyolefin layers and which are better adapted for recycling, without necessarily having to use compatibilizers.

### Object of the invention

It is an object of the present invention to overcome or ameliorate at least one of the disadvantages of the prior art.

Other objects of the present invention will become apparent to those skilled in the art by reference to the specification.

### Summary of the invention

The present inventors have surprisingly found that films which include a layer of polyamide and a layer of polyolefin are better adapted for recycling without necessarily having to use compatibilizers, when such films include a relatively lower thickness of polyamide layer, or layers, if there is more than one layer.

Thus, according to a first aspect, the present invention provides a film for packaging a product, which includes:
(i) an outermost layer of polyamide, which is not biaxially oriented ;
(ii) an inner layer of polyolefin;
(iii) a first tie-layer between said outermost layer of polyamide and said inner layer of polyolefin;
(iv) an innermost layer comprising metallocene polyolefin,
(v) a further layer of polyamide, which is not biaxially oriented, between said first tie-layer and said inner layer of polyolefin; and,
(vi) a second tie-layer between said further layer of polyamide and said inner layer of polyolefin,
wherein the combined thickness of said further layer of polyamide and said outermost layer of polyamide is not greater than 25% of the total thickness of the film and wherein combined thickness of said outermost layer of polyamide and said further layer of polyamide is 4 µm to 10 µm and further wherein said film is blown-extruded film or a cast coextruded film.

According to a second aspect the present invention relates to a package made of a film according to the first aspect.

According to a third aspect, the present invention relates to use of a film of the first aspect for making a package for a product.

The term "comprising" is meant not to be limiting to any subsequently stated elements but rather to encompass non-specified elements of major or minor functional importance. In other words the listed steps, elements or options need not be exhaustive. Whenever the words "including" or "having" are used, these terms are meant to be equivalent to "comprising" as defined above.

The recitation of numerical ranges by endpoints includes all numbers subsumed within that range (e.g. 1 to 5 includes 1, 1.5, 2, 2.75, 3, 3.80, 4, and 5).

As used in this specification and the appended claims, the singular forms "a", "an", and "the" include plural referents unless the content clearly dictates otherwise. Thus, for example, reference to a film containing "a layer" includes a mixture of two or more layers. As used in this specification and the appended claims, the term "or" is generally employed in its sense including "and/or" unless the content clearly dictates otherwise.

Except in the operating and comparative examples, or where otherwise explicitly indicated, all numbers in this description indicating amounts of material ought to be understood as modified by the word "about".

It should be noted that in specifying any range of concentration, percentage, or amount, any particular upper range can be associated with any particular lower range.

Details of the invention will now be explained.

### Detailed description

In accordance with a first aspect, the present invention relates to a film for packaging a product, comprising:
(i) an outermost layer of polyamide, which is not biaxially oriented;
(ii) an inner layer of polyolefin;
(iii) a first tie-layer between said outermost layer of polyamide and said inner layer of polyolefin;
(iv) an innermost layer comprising metallocene polyolefin,
(v) a further layer of polyamide, which is not biaxially oriented, between said first tie-layer and said inner layer of polyolefin; and,
(vi) a second tie-layer between said further layer of polyamide and said inner layer of polyolefin,
wherein the combined thickness of said further layer of polyamide and said outermost layer of polyamide is not greater than 25% of the total thickness of the film and wherein combined thickness of said outermost layer of polyamide and said further layer of polyamide is 4 µm to 10 µm and further wherein said film is blown-extruded film or a cast coextruded film.

### Outermost layer of polyamide:

The outermost layer of polyamide may be made of a homopolymer, or a copolymer. Useful polyamide homopolymers include nylon 6 (polycaprolactam), nylon 11 (polyundecanolactam), and nylon 12 (polylauryllactam). Useful polyamide homopolymers also include nylon 4,2 (polytetramethylene ethylenediamide), nylon 4,6 (polytetramethylene adipamide), nylon 6,6 (polyhexamethylene adipamide), nylon 6,9 (polyhexamethylene azelamide), nylon 6,10 (polyhexamethylene sebacamide), nylon 6,12 (polyhexamethylene dodecanediamide), nylon 7,7 (polyheptamethylene pimelamide), nylon 8,8 (polyoctamethylene suberamide), nylon 9,9 (polynonamethylene azelamide), nylon 10,9 (polydecamethylene azelamide), and nylon 12,12 (polydodecamethylene dodecanediamide).

Useful polyamide copolymers also include nylon 6,6/6 copolymer (polyhexamethylene adipamide/caprolactam copolymer), nylon 6/6,6 copolymer (polycaprolactam/hexamethylene adipamide copolymer), nylon 6,2/6,2 copolymer (polyhexamethylene ethylenediamide/hexamethylene ethylenediamide copolymer), nylon 6,6/6,9/6 copolymer (polyhexamethylene adipamide/hexamethylene azelaiamide/caprolactam copolymer), as well as other nylons which are not particularly delineated here.

It is highly preferred that the polyamide is co-extruded Nylon, more preferably Nylon-6. A particularly preferred grade of Nylon is ULTRAMID™ B33L ex. BASF.

The type and thickness of the polyamide layer may be selected for the desired degree of barrier effect. It is preferred that thickness of the outermost layer of polyamide is not greater than 20% of the total thickness of the film. More preferably, the outermost layer of polyamide accounts for 10% to 20% of the total thickness of the film, and most preferably it is 5% to 10%. The polyamide is not of the biaxially oriented type. It has been found by the present inventors that films which include biaxially oriented polyamide, especially biaxially oriented Nylon (BON) are comparatively difficult to recycle, and the resultant recycled films are of a comparatively inferior quality.

It is preferred that density of the polyamide is 1.12 to 1.15g/cm³.

It is preferred that heat deflection temperature of the polyamide is from 150°C to 160°C. Between the temperature ranges of 150°C to 160°C, the polyamide has a high heat resistance and withstands higher temperatures that are typically used for sealing. The high heat resistance enables sealing without the polyamide layer sticking to heat sealing jaws with or without the use of impulse sealing system.

It is preferred that the polyamide layer is surface-printed, as opposed to reverse-printed. One skilled in the art would know the difference between surface-printing and reverse-printing. To facilitate surface-printing, it is preferred that the surface energy of the polyamide layer is 42 to 48 dyne/cm.

The surface energy may be increased by using any known method, such as corona treatment, or by using lasers. The inks used for printing are preferably of polar nature. They are preferably alkali resistant and soap resistant. It is preferred to use heat resistant inks. It is further preferred that the inks do not flake-off above 100°C. It is preferred that when the outermost layer of polyamide is surface-printed, it is also coated with an overprint varnish. The overprint varnish increases the heat resistance of the polyamide layer. The overprint varnish is preferably a polyurethane based varnish. Thickness of the overprint varnish is preferably 0.5 g/m². The varnish also gives the print a glossy appearance. Further the overprint varnish provides scuff resistance, which is helpful during transportation of packaged goods. Such varnishes are commercially available from Dai Nippon Ink and Chemicals, Japan or Siegwerk, Germany. The print may preferably be sandwiched between a cross-linked, two-component over print varnish and the polyamide layer, to have a combination of good gloss, scuff resistance, coefficient of friction, and heat resistance.

### First tie-layer:

A tie-layer binds two different materials. The tie layer ensures proper binding between the polyamide layer and the polyolefin layer. The tie layer makes the film stiff and reduces curls and wrinkles. The tie layer may include a polyolefin modified with anhydride or with an acid, or a polyolefin copolymer having functional groups. Examples of suitable tie-layers are found among conventional tie resins known in the art and being compatible with polyolefins (PE) and adhering to polyamide (PA). Typically such tie resins are polyolefins modified with an unsaturated carboxylic acid or anhydride. Preferred material for the tie-layer include anhydride-modified polyethylene, an acid copolymer of ethylene like EAA (ethylene acrylic acid) or EMAA (ethylene methyl acrylic acid), an acid-modified ethylene vinyl acetate, an acid-modified ethylene (meth)acrylate, anhydride-modified ethylene (meth)acrylate, an anhydride-modified ethylene vinyl acetate, an acid/acrylate-modified ethylene vinyl acetate or a polymer blend containing at least one of the above-stated materials. A highly preferred tie layer includes ethylene acrylate copolymer.

Suitable examples are the adhesive maleic anhydride modified LLDPE (Linear Low Density Polyethylene) resins of the BYNEL™ 4100 series from DuPont including BYNEL™ CXA 4157; and the linear low density polyethylene (LLDPE) with incorporated functional groups, such as YPAREX™ OH-029 from DSM Polyethylenes. Further usable functionalized polyolefins among the BYNEL™ adhesive resins from DuPont are those having a high affinity for PA and PE from the series 2100 (anhydride- modified ethylene acrylate); 3000 and 3900 (anhydride-modified EVA [ethylene vinyl acetate]); 4000 (anhydride-modified HDPE); 4100 (anhydride-modified LLDPE); and 4200 (anhydride- modified LDPE). Furthermore series 5000 (anhydride-modified PP) having high affinity for PA and PP (polypropylene). Other functionalized polyolefins, such as TYMOR™ 1203 and TYMOR™ 1204, manufactured by Nichimen Europe, are also useful. A particularly preferred material is BYNEL™ 41 E71 0 ex. DuPont. It is preferred that thickness of the first tie-layer is 2 µm to 4 µm.

### Further layer of polyamide:

The film includes a further layer of polyamide between the first tie-layer and the inner layer of polyolefin; and, a second tie-layer between the further layer of polyamide and the inner layer of polyolefin, wherein combined thickness of the further layer of polyamide, and the outermost layer of polyamide is not greater than 25% of the total thickness of the film. This further layer of polyamide is also not biaxially oriented. When the film has two layers of polyamide, the film exhibits relatively lower tendency to curl, and there is a balance between the individual layers. Further preferably, the outermost layer of polyamide, and the further layer of polyamide includes co-extruded Nylon. Other materials that may be used for the outermost layer of polyamide may also be used for this further layer of polyamide.

The combined thickness of the outermost layer of polyamide, and the further layer of polyamide is 4µm to 10µm, preferably 8µm to 10µm. When the combined thickness of the polyamide film is lower than 4 µm, the tolerance may not allow easy processing and consistency of results. Any technical benefit that might come by increasing the combined thickness beyond 10 µm may be offset by an increase in cost. Still further, the heat sensitivity is directly proportional to the thickness of the layers. Without wishing to be bound by theory it is stated that it is preferable to have only the innermost layers to melt and fuse to each other while forming a package, such as a vertical form-fill-seal pouch; while the outermost layer, and the intermediate layers should only soften and not melt.

### Second layer of tie-layer:

Preferred materials and thickness of the second tie-layer is the same as that for the first tie-layer described above.

### Inner layer of polyolefin:

The term polyolefin refers to homopolymers, copolymers, including, e.g., bipolymers, and terpolymers, having a methylene linkage between monomer units which may be formed by any method known to those skilled in the art. Examples of polyolefins include polyethylene (PE), low-density polyethylene (LDPE), linear low-density polyethylene (LLDPE), very low-density polyethylene (VLDPE), ultra low-density polyethylene (ULDPE), medium-density polyethylene (MDPE), high-density polyethylene (HDPE), ultra high-density polyethylene (UHDPE), ethylene/propylene copolymers, polypropylene (PP), propylene/ethylene copolymer, polyisoprene, polybutylene, polybutene, poly-3-methylbutene-1, poly-4-methylpentene-1, ionomers, polyethylenes comprising ethylene/[alpha]-olefin which are copolymers of ethylene with one or more [alpha]-olefins (alpha-olefins) such as butene-1, hexene-1, octene-1, or the like as a co-monomer, and the like. As used herein, the term "copolymer" refers to polymers formed by the polymerization of reaction of at least two different monomers. For example, the term "copolymer" includes the co-polymerization reaction product of ethylene and an [alpha]-olefin, such as 1-hexene. The term "copolymer" is also inclusive of, for example, the co-polymerization of a mixture of ethylene, propylene, 1-propene, 1-butene, 1-hexene, and 1-octene. As used herein, a copolymer identified in terms of a plurality of monomers, e.g., "propylene/ethylene copolymer", refers to a copolymer in which either a monomer may co-polymerize in a higher weight or molar percent than the other monomer or monomers.

It is preferred that the inner layer of polyolefin accounts for 60% to 85% of total film thickness. It is highly preferred that thickness of the inner layer of polyolefin is 4µm to 35µm, preferably 4µm to 12µm.

Preferably, the inner layer of polyolefin includes HDPE, MDPE, PP (Polypropylene) homopolymer, or PP random copolymer, or LDPE. The inner layer of polyolefin gives body and stiffness to the film, and in the absence of the polyolefin layer, the film does not tend to remain stiff, develops curls, develops wrinkles, and further, it does not easily pass through rollers on a pouch making machine. There may be more than one such inner layers of polyolefin.

### Innermost layer of metallocene polyolefin:

One skilled in the art would know what metallocene polyolefin means. The term metallocene polyolefin denotes polymers obtained by copolymerizing ethylene and an alpha-olefin, such as propylene, butene, hexene or octene, in the presence of a monosite catalyst generally consisting of an atom of a metal which may, for example, be Zirconium or Titanium, and of two cyclic alkyl molecules bonded to the metal. More specifically, the metallocene catalysts are usually composed of two cyclopentadiene-type rings bonded to the metal. These catalysts are often used with aluminoxanes as cocatalysts or activators, preferably methylaluminoxane (MAO). Hafnium may also be used as a metal to which the cyclopentadiene is bound. Other metallocenes may include transition metals of groups IV A, V A and VI A. Metals of the lanthanide series may also be used. These metallocene polyolefin may also be characterized by their Mw/Mn ratio. Preferred metallocene polyolefins are the ones having narrow molecular weight distribution, which may be indicated by the ratio of weight average molecular weight to number average molecular weight. Such resins preferably have a ratio of weight average molecular weight to number average molecular weight of less than 3, more preferably 2 to 2.25, and most preferably less than 2. It is preferred that the weight average molecular weight of the metallocene polyolefin is 5,000 D to 50,000 D. The metallocene polyolefin layer is the innermost layer of the film. It is preferred that the innermost layer having metallocene polyolefin includes metallocene Linear Low Density Polyethylene (LDPE). Without wishing to be bound by theory it is believed that metallocene polyolefin helps provide higher seal strength, improve the seal-through contamination, provide better impact resistance, and a low seal initiation temperature.

It is also believed that this layer provides hermetic sealing even in the presence of contaminants. A particularly preferred grade is ELITE™ 5101 ex. Dow Chemicals. Another preferred grade is sold under the trademark EXACT™ 3132 by Exxon Corporation. It is particularly preferred that the innermost layer having metallocene polyolefin accounts for 20% to 45% of the total film thickness, preferably 30% to 36%. It is further particularly preferred that the thickness of this metallocene polyolefin is 10µm to 20µm, more preferably 14µm to 16µm. In the preferred embodiment, the metallocene polyolefin is mixed with standard low density polyethylene polymers at a temperature above the softening temperature of the polymers to form the preferred blend. The blend is then extruded into the desired layer having metallocene polyolefin.

Films in accordance with this invention are made by extrusion lamination (co-extruded film), e.g. by using blown film extrusion process. The process is well-known to the person skilled in the art. A typical film blowing process includes extrusion of a tube of molten thermoplastic polymer, and continuously inflating it to several times its initial diameter to form a thin tubular product that can be used directly, or slit to form a flat film.

Preferred process controls include a die size of 8 inches, a die lip gap of 2.5mm, and a blow-up ratio of 2.8.

### The film:

The film may be transparent or opaque, coloured or colourless. Preferably, the total thickness of the film is 30µm to 300µm, more preferably 30µm to 45µm, most preferably 40µm to 45µm. The film is blown-extruded film, or a co-extruded film, more preferably a blown-extruded film. Also, if desired, well-known additives such as processing aids, slip agents, anti-blocking agents and pigments, and mixtures thereof may be incorporated into the film, by blending prior at an appropriate stage of the process. The inventors also observed that when such a film was printed and an over-print varnish was applied thereon, the printed film surprisingly showed properties comparable to laminates, such as Polyethylene terepthalate/polyethylene or biaxially oriented nylon/polyethylene laminate.

These properties were:
i) high gloss;
ii) resistance to scuffing of the print, at the sealed and unsealed areas when formed into pouches or sachets;
iii) resistance to alkali and soap;
iv) ability to run at high speed on form-fill-seal machines;
v) ability to seal-through contamination of dusty particles such as a detergent powder, or liquids, such as a shampoo; and,
vi) the sealed areas had relatively higher seal strength when the film was formed into pouches and sachets.

In accordance with a second aspect, the invention relates to a package made from a film according to the first aspect of the invention. In accordance with a third aspect, the invention relates to use of a film according to the first aspect for making a package for a product.

The film is suitable for packaging Home and Personal Care products such as detergent powders, toothpaste, shampoo, hair conditioner, fabric conditioner, dish wash liquid detergents, liquid fabric wash detergents; and food products such as jams, squashes, ketchups, tea powder, and coffee powder in sachets or pouches. The film is particularly suited for packaging granular products, but it may be used for packaging liquids, as well as semi-solid products. The sachets and pouches may be made by vertical form-fill-seal (VFFS) or horizontal form-fill-seal (HFFS) processes. These processes are well known to those skilled in the art. Thicker films, e.g. films having thickness from 200µm to 300µm may also be used to make collapsible plastic tubes, which are generally used to pack toothpastes and shaving creams. Any process which is known in the art may be used to make such tubes.

### Recycling:

Films according to the invention may be recycled in any known manner, e.g. by washing and re-pelletizing, dry processing and re-pelletizing, or by converting ground film directly into a product.

The films could also be recycled by the less common process of densification, or use of an agglomerator. Although not essential, the addition of small amount of a compatibilizer, such as FUSABOND™ ex. DuPont may aid recyclability and such recycled films been found to have better physical and mechanical properties.

The invention will now be explained in greater details, with the help of the following non-limiting examples of preferred films.

### Examples

### Example-1

A preferred multi-layer film was made by blown-extrusion process. Structure of the film (starting from the outermost layer) is as follows:
(i) outermost layer of polyamide, ULTRAMID™ B33L, 4 µm
(ii) first tie-layer of BYNEL™ 41E710 (could also use a blend of LLDPE and BYNEL™ 41E710), 4µm
(iii) polyolefin, blend of HDPE/LDPE/LLDPE, 4µm
(iv) second tie-layer of BYNEL™ 41E710 (could also use a blend of LLDPE and BYNEL™ 41E710), 4µm
(v) further layer of polyamide, ULTRAMID™ B33L, 4µm
(vi) third tie-layer of BYNEL™ 41E710 (could also use a blend of LLDPE and BYNEL™ 41E710), 4µm
(vii) innermost metallocene LLDPE 90 % + LDPE 10 %, 16µm.

The film of Examples 1 was subjected to standard tests. Results of the tests are presented in table-1 below.

**Table-1**

| **Parameter** | **Values** |
|---|---|
| Moisture vapour transmission rate (MVTR¹) | 9.2 g/m²/24 hours @ 38°C 90% relative humidity |
| Oxygen transmission rate (OTR²) | 50 to 70cc/m²/24 hours |
| Falling Dart Impact³ | > 410 gram force |
| Seal strength of the laminate | > 2.5 kg/15mm |

| | |
|---|---|
| ¹ - Moisture vapour transmission rate (MVTR), also known as water vapor transmission rate (WVTR), is a measure of the passage of water vapor through a substance. ² - Oxygen transmission rate (OTR) is the measurement of the amount of oxygen gas that passes through a substance over a given period. It is mostly carried out on non-porous materials, where the mode of transport is diffusion, but there are a growing number of applications where the transmission rate also depends on flow through apertures of some description. ³ - Falling dart impact, also known as Gardner impact, is a traditional method for evaluating the impact strength or toughness of a plastic material. The test is often used to specify appropriate materials for applications involving impact or to evaluate the effect of secondary finishing operations or other environmental factors on plastic impact properties. | |

### Recyclability of a preferred film:

The preferred film of Example-1 was recycled by first cutting the film roll and shredding the film. The shredded mass was then agglomerated in a twelve-blade agglomerator. The nylon layer melted and mixed with the polyethylene layer by the adiabatic heat generated in the agglomerator. The agglomerated material was then melt-extruded through a single screw extruder under atmospheric conditions. The strands generated by the extrusion process were converted into granules, which were dried in an air oven at 70°C. These granules of recycled film were used to make films.

Three different types of mono-layer films were made by blown process under identical conditions. Film 1 was made using HMHDPE (High Molecular High Density Polyethylene) and 30% granules. Film 2 was made using HMHDPE, 30% granules and 1.5% FUSABOND™. For comparative analysis a film (comparative Film 3) was made using 100% HMHDPE. The physical and mechanical properties of these three films were measured. These are shown in table 2.

**Table 2**

| Properties | Film 1 | Film 2 | Film 3 |
|---|---|---|---|
| Static coefficient of friction | 0.2215 | 0.1985 | 0.2255 |
| Kinetic coefficient of friction | 0.1865 | 0.1885 | 0.1750 |
| Dart impact value at 66cm and 500mm Hg (Gf) | 70 | 115 | 100 |
| Opacity (%) | 25.3 | 21.9 | 23.7 |
| Tensile strength in machine direction (kg/cm²) | 319.6 | 398.65 | 309.33 |
| Tensile strength in transverse direction (kg/cm²) | 265.1 | 266.66 | 291.4 |
| Surface tension treatment side (Dyne/cm) | 34 | 34 | 34 |
| Seal strength (Inner X Inner), (with 10µm PET film) (kg/15mm) at 130°C | 0.879 | 1.108 | 1.024 |
| Seal strength (Inner X Inner), (with 10µm PET film) (kg/15mm) at 135°C | 1.028 | 1.332 | 1.056 |

The data in table 2 indicates that most of the physical and mechanical properties of Films 1 and 2 are comparable. Some of the physical and mechanical properties of Film 1 and Film 2 are superior to that of comparative Film 3.

It will be appreciated that the illustrated examples provide for a film which includes a layer of polyamide and a layer of polyolefin, and which is better adapted for recycling, without necessarily having to use compatibilizers. Use of a compatibilizer like FUSABOND™ provides recycled films with better properties.

It should be understood that the specific forms of the invention herein illustrated and described are intended to be representative only as certain changes may be made therein without departing from the clear teachings of the disclosure. Although the invention has been described with reference to specific embodiments, it will be appreciated by those skilled in the art that the invention may be embodied in many other forms.

## Claims

1. A film for packaging a product, comprising:
(i) an outermost layer of polyamide, which is not biaxially oriented;
(ii) an inner layer of polyolefin;
(iii) a first tie-layer between said outermost layer of polyamide and said inner layer of polyolefin;
(iv) an innermost layer comprising metallocene polyolefin,
(v) a further layer of polyamide, which is not biaxially oriented, between said first tie-layer and said inner layer of polyolefin; and,
(vi) a second tie-layer between said further layer of polyamide and
said inner layer of polyolefin,
wherein the combined thickness of said further layer of polyamide and said outermost layer of polyamide is not greater than 25% of the total thickness of the film and wherein combined thickness of said outermost layer of polyamide and said further layer of polyamide is 4µm to 10µm and further wherein said film is blown-extruded film or a cast coextruded film.

2. A film for packaging a product as claimed in claim 1 wherein total thickness of said film is 30µm to 300µm.

3. A film for packaging a product as claimed in claim 1 or 2 wherein thickness of said first tie-layer is 2µm to 4µm.

4. A film for packaging a product as claimed in any one of the preceding claims wherein thickness of said inner layer of polyolefin is 4µm to 35µm.

5. A film for packaging a product as claimed in any one of the preceding claims wherein said metallocene polyolefin comprises metallocene Linear Low Density Polyethylene.

6. A film for packaging a product as claimed in any one of the preceding claims wherein surface energy of said outermost layer of polyamide is 42 dynes/cm to 48 dynes/cm.

7. A film for packaging a product as claimed in claim 6 wherein surface of said outermost layer of polyamide is printed.

8. A film for packaging a product as claimed in claim 7 wherein surface of said outermost layer of polyamide which is printed, is coated with an overprint varnish.

9. A package made from a film as claimed in claim 1.

10. Use of a film as claimed in claim 1 for making a package for a product.

## Patentansprüche

1. Folie zum Verpacken eines Produktes,
die Folgendes aufweist:
(i) eine Außenschicht aus Polyamid, die nicht biaxial orientiert ist;
(ii) eine innere Schicht aus Polyolefin;
(iii) eine erste Verbindungsschicht zwischen der Außenschicht aus Polyamid und der inneren Schicht aus Polyolefin;
(iv) eine innerste Schicht, die Metallocen-Polyolefin aufweist;
(v) eine weitere Schicht aus Polyamid, die nicht biaxial orientiert ist, zwischen der ersten Verbindungsschicht und der inneren Schicht aus Polyolefin; und
(vi) eine zweite Verbindungsschicht zwischen der weiteren Schicht aus Polyamid
und der inneren Schicht aus Polyolefin,
wobei die Summe der Dicke der weiteren Schicht aus Polyamid und der der Außenschicht aus Polyamid nicht mehr als 25 % der Gesamtdicke der Folie ausmacht und wobei die Summe der Dicke der Außenschicht aus Polyamid und der der weiteren Schicht aus Polyamid 4 bis 10 µm beträgt und wobei die Folie ferner eine blasgespritzte Folie oder eine coextrudierte Gießfolie ist.

2. Folie zum Verpacken eines Produktes nach Anspruch 1,
wobei die gesamte Dicke der Folie 30 bis 300 µm beträgt.

3. Folie zum Verpacken eines Produktes nach Anspruch 1 oder 2,
wobei die Dicke der ersten Verbindungsschicht 2 bis 4 µm beträgt.

4. Folie zum Verpacken eines Produktes nach einem der vorstehenden Ansprüche, wobei die Dicke der inneren Schicht aus Polyolefin 4 bis 35 µm beträgt.

5. Folie zum Verpacken eines Produktes nach einem der vorstehenden Ansprüche, wobei das Metallocen-Polyolefin lineares Metallocen-Polyethylen niedriger Dichte aufweist.

6. Folie zum Verpacken eines Produktes nach einem der vorstehenden Ansprüche, wobei die Oberflächenenergie der Außenschicht aus Polyamid 42 bis 48 dyne/cm beträgt.

7. Folie zum Verpacken eines Produktes nach Anspruch 6,
wobei die Oberfläche der Außenschicht aus Polyamid bedruckt ist.

8. Folie zum Verpacken eines Produktes nach Anspruch 7,
wobei die Oberfläche der Außenschicht aus Polyamid, die bedruckt ist, mit einem Überdruck in Form von Klarlack überzogen ist.

9. Verpackung, die aus einer Folie nach Anspruch 1 hergestellt ist.

10. Verwendung einer Folie nach Anspruch 1 für die Herstellung einer Verpackung für ein Produkt.

## Revendications

1. Film pour emballer un produit, comprenant :
(i) une couche plus externe de polyamide, laquelle n'est pas bi-axialement orientée ;
(ii) une couche interne de polyoléfine ;
(iii) une première couche d'attache entre ladite couche plus externe de polyamide et ladite couche interne de polyoléfine ;
(iv) une couche plus interne comprenant une polyoléfine de métallocène,
(v) une autre couche de polyamide, laquelle n'est pas bi-axialement orientée, entre ladite première couche d'attache et ladite couche interne de polyoléfine ; et
(vi) une seconde couche d'attache entre ladite autre couche
de polyamide et ladite couche interne de polyoléfine, dans lequel l'épaisseur combinée de ladite autre couche de polyamide et de ladite couche plus externe de polyamide n'est pas supérieure à 25 % de l'épaisseur totale du film et dans lequel l'épaisseur combinée de ladite couche plus externe de polyamide et de ladite autre couche de polyamide est de 4 µm à 10 µm et de plus dans lequel ledit film est un film soufflé-extrudé ou un film coextrudé par coulée.

2. Film pour emballer un produit selon la revendication 1, dans lequel l'épaisseur totale dudit film est de 30 µm à 300 µm.

3. Film pour emballer un produit selon la revendication 1 ou 2, dans lequel l'épaisseur de ladite première couche d'attache est de 2 µm à 4 µm.

4. Film pour emballer un produit selon l'une quelconque des revendications précédentes, dans lequel l'épaisseur de ladite couche interne de polyoléfine est de 4 µm à 35 µm.

5. Film pour emballer un produit selon l'une quelconque des revendications précédentes, dans lequel ladite polyoléfine de métallocène comprend du polyéthylène faible densité linéaire de métallocène.

6. Film pour emballer un produit selon l'une quelconque des revendications précédentes, dans lequel l'énergie de surface de ladite couche plus externe de polyamide est de 42 dynes/cm à 48 dynes/cm.

7. Film pour emballer un produit selon la revendication 6, dans lequel la surface de ladite couche plus externe de polyamide est imprimée.

8. Film pour emballer un produit selon la revendication 7, dans lequel la surface de ladite couche plus externe de polyamide qui est imprimée, est revêtue avec un vernis de surimpression.

9. Emballage fabriqué à partir d'un film selon la revendication 1.

10. Utilisation d'un film selon la revendication 1 pour la fabrication d'un emballage pour un produit.
